# EUROPÄISCHE PATENTSCHRIFT

(11) **EP 1 433 836 B1**
(45) Veröffentlichungstag und Bekanntmachung des Hinweises auf die Patenterteilung: **06.04.2016**
(21) Anmeldenummer: 03027827.9
(22) Anmeldetag: 04.12.2003
(51) Int. Cl.: C10L 1/18, C10L 1/14, C08F 210/02

(54) **Brennstofföle mit verbesserten Kälteeigenschaften**
Fuel oils with improved cold properties.
Huiles combustibles à propriétés au froid améliorées.

(30) Priorität: 23.12.2002 DE 10260714
(43) Veröffentlichungstag der Anmeldung: 30.06.2004
(73) Patentinhaber: Clariant Produkte (Deutschland) GmbH, 65929 Frankfurt am Main (DE)
(72) Erfinder: Krull, Matthias, Dr., 55296 Harxheim (DE); Kupetz, Markus, 46539 Dinslaken (DE); Wildfang, Raimund, 46147 Oberhausen (DE)

(56) Entgegenhaltungen:
- EP-A- 0 892 012
- EP-A- 0 931 824
- EP-A- 1 116 780
- EP-B- 1 007 605
- WO-A-96/07718
- WO-A-96/17905

## Beschreibung

Die vorliegende Erfindung betrifft Mineralöle und Mineralöldestillate mit verbesserten Kälteeigenschaften und ein Polymer zur Verbesserung der Kälteeigenschaften.

Rohöle und durch Destillation von Rohölen gewonnene Mitteldestillate wie Gasöl, - Dieselöl oder Heizöl enthalten je nach Herkunft der Rohöle unterschiedliche Mengen an n-Paraffinen, die bei Erniedrigung der Temperatur als plättchenförmige Kristalle auskristallisieren und teilweise unter Einschluss von Öl agglomerieren. Dadurch kommt es zu einer Verschlechterung der Fließeigenschaften dieser Öle bzw. Destillate, wodurch beispielsweise bei Gewinnung, Transport, Lagerung und/oder Einsatz der Mineralöle und Mineralöldestillate Störungen auftreten können. Bei Mineralölen kann dieses Kristallisationsphänomen beim Transport durch Rohrleitungen vor allem im Winter zu Ablagerungen an den Rohrwänden, in Einzelfällen, z.B. bei Stillstand einer Pipeline, sogar zu deren völliger Verstopfung führen. Auch bei der Lagerung und Weiterverarbeitung der Mineralöle kann die Ausfällung von Paraffinen Schwierigkeiten verursachen. So kann es im Winter unter Umständen erforderlich sein, die Mineralöle in beheizten Tanks zu lagern. Bei Mineralöldestillaten können als Folge der Kristallisation Verstopfung der Filter in Dieselmotoren und Feuerungsanlagen auftreten, wodurch eine sichere Dosierung der Brennstoffe verhindert wird und gegebenenfalls eine völlige Unterbrechung der Kraftstoff- bzw. Heizmittelzufuhr eintritt.

Neben den klassischen Methoden zur Beseitigung der auskristallisierten Paraffine (thermisch, mechanisch oder mit Lösungsmitteln), die sich lediglich auf die Entfernung der bereits gebildeten Ausfällungen beziehen, wurden in den letzten Jahren chemische Additive (sogenannten Fließverbesserer oder Paraffin-Inhibitoren) entwickelt, die durch physikalisches Zusammenwirken mit den ausfallenden Paraffinkristallen dazu führen, dass deren Form, Größe und Adhäsionseigenschaften modifiziert werden. Die Additive wirken dabei als zusätzliche Kristallkeime und kristallisieren teilweise mit den Paraffinen aus, wodurch eine größere Anzahl von kleineren Paraffinkristallen mit veränderter Kristallform resultiert. Ein Teil der Wirkung der Additive wird auch durch eine Dispergierung der Paraffinkristalle erklärt. Die modifizierten Paraffinkristalle neigen weniger zur Agglomeration, so dass sich die mit diesen Additiven versetzten Öle noch bei Temperaturen pumpen bzw. verarbeiten lassen, die oft mehr als 20° tiefer liegen als bei nichtadditivierten Ölen.

Das Fließ- und Kälteverhalten von Mineralölen und Mineralöldestillaten wird durch Angabe des Cloud Point (bestimmt nach ISO 3015), des Pour-Points (bestimmt nach ISO 3016) und des Cold-Filter-Plugging-Points (CFPP; bestimmt nach EN 116) beschrieben. Diese Kenngrößen werden in °C gemessen.

Typische Fließverbesserer für Rohöle und Mitteldestillate sind Copolymerisate des Ethylens mit einem oder mehreren Carbonsäureestern des Vinylalkohols. Insbesondere bei kritischen Blendingbedingungen haben sich dabei Terpolymere, die neben Ethylen einen kurzkettigen sowie einen längerkettigen, verzweigten Vinylester enthalten bewährt. Diese zeichnen sich durch eine gegenüber Ethylen-Vinylacetat-Copolymeren verbesserte Löslichkeit in Mitteldestillaten aus.

EP-A-0 493 769 offenbart Terpolymere, die aus Ethylen, Vinylacetat und Neononan- bzw. Neodecansäurevinylester hergestellt werden, sowie ihre Verwendung als Additive für Mineralöldestillate.

EP-A-0 778 875 offenbart Ethylen-Terpolymere mit kurzkettigen Vinylestern und verzweigten Alkylvinylestern mit bis zu 7 C-Atomen bzw. nicht tertiären C₈-C₁₅-Alkylvinylestern und einem Verzweigungsgrad von weniger als 6 CH₃/100 CH₂-Gruppen als Fließverbesserer für Mineralöl- und Biodiesel. In den Beispielen werden Ethylen-Terpolymere mit 1,2 - 7,73 mol-% Vinylacetat und 7,4 - 12,8 mol-% Vinyl-2-ethylhexanoat offenbart.

EP-A-0 890 589 offenbart Copolymere aus Ethylen und mindestens 3 mol-% (bevorzugt bis 15 mol-%) an Vinylestern von Neocarbonsäuren mit 6 bis 16 C-Atomen als Fließverbesserer für Mitteldestillate, speziell solche Mitteldestillate mit niedrigem Schwefelgehalt, Cloud Point und Siedeende. Diese Copolymere können gegebenenfalls bis zu 4 Gew.-% (3,6 mol-%) Vinylacetat oder bis zu 5 mol-% anderer Monomere enthalten. Die Beispiele offenbaren Copolymere mit 4,8 - 13,8 mol-% an Neodecansäurevinylester.

EP-A-1 007 605 offenbart Terpolymere aus Ethylen, 2,5 - 4,5 mol-% Vinylacetat und 9,5 - 14 mol-% eines verzweigten Vinylesters mit bis zu 15 C-Atomen, wobei die Polymere ein mittleres Molekulargewicht von 3.500 - 6.000 g/mol und einen Verzweigungsgrad von 2,2 bis 3,6 CH₂/100CH₃-Gruppen aufweisen. Bevorzugt werden Vinylester nicht tertiär verzweigter Fettsäuren verwendet.

EP-A-0 931 824 offenbart Additivmischungen für Brennstofföle mit niedrigem Schwefelgehalt und einem Gehalt an n-Paraffinen der Kettenlänge C₁₈ und länger von mindestens 8 Gew.-%, die als Nucleatorkomponente Terpolymere aus Ethylen, 1 bis 10 mol-% Neocarbonsäurevinylester und bis zu 10 mol-% Vinylacetat enthalten können.

EP-A-0 796 306 offenbart Additive zur Stabilisierung des CFPP in Mitteldestillaten. Diese Additive enthalten neben Terpolymeren aus Ethylen, Vinylacetat und Neocarbonsäurevinylestern Nucleatoren auf Basis von Copolymeren mit niedrigem Vinylacetatgehalt. Nachteilig an den dort vorgeschlagenen Mischungen ist der Anteil an hochkristallinen Copolymeranteilen, die insbesondere bei niedrigen Öl- und/oder Additivtemperaturen bei der Additivierung die Filtrierbarkeit der additivierten Öle oberhalb des Cloud Points beeinträchtigen.

EP-A-1 116 780 lehrt Additive zur Verbesserung von Kaltfließ- und Schmiereigenschaften von Brennstoffölen, bestehend aus
A) 5 - 95 Gew.-% mindestens eines öllöslichen Amphiphils der Formel 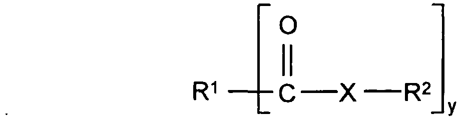 und/oder und/oder

   R¹ - X - R²

   worin
   R¹ einen Alkyl-, Alkenyl- Hydroxyalkyl- oder aromatischen Rest mit 1 bis 50 Kohlenstoffatomen
   X NH, NR³, O oder S,
   y 1,2,3 oder 4,
   R² Wasserstoff oder einen Hydroxylgruppen tragenden Alkylrest mit 2 bis 10 Kohlenstoffatomen und
   R³ einen Stickstoff und/oder Hydroxylgruppen tragenden Alkylrest mit 2 bis 10 Kohlenstoffatomen oder C₁-C₂₀-Alkyl
   bedeutet,
B) 5 bis 95 Gew.-% eines Terpolymers, enthaltend 10 bis 35 mol-% Struktureinheiten, abgeleitet aus dem Vinylester einer Carbonsäure mit 2 bis 4 C-Atomen, 1 bis 15 mol-% Struktureinheiten, abgeleitet aus dem Vinylester einer Neocarbonsäure mit 8 bis 15 Kohlenstoffatomen, und Struktureinheiten aus Ethylen ad 100 mol-% mit einer bei 140 °C gemessenen Schmelzviskosität von 20 bis 10.000 mPas.

Im Zuge der abnehmenden Erdölreserven bei ständig steigendem Energiebedarf werden immer problematischere Rohöle gefördert und verarbeitet. Darüber hinaus werden die Anforderungen an die daraus hergestellten Brennstofföle wie Diesel und Heizöl nicht zuletzt durch legislative Vorgaben immer anspruchsvoller. Beispiele dafür sind die Absenkung des Schwefelgehaltes, die Begrenzung des Siedeendes sowie des Aromatengehaltes von Mitteldestillaten, die die Raffinerien zu ständiger Anpassung der Verarbeitungstechnologie zwingen. Das Up-Grading der Mitteldestillate führt in vielen Fällen zu einem erhöhten Anteil an Paraffinen, speziell im Kettenlängenbereich von C₁₈ bis C₂₄, was wiederum einen negativen Einfluss auf die Kaltfließeigenschaften dieser Brennstofföle hat. Es ist daher wünschenswert, Kaltfließverbesserer mit einer gegenüber dem Stand der Technik verbesserten Effizienz sowie mit einem verbreiterten Wirkungsspektrum in diesen Ölen zu haben.

Darüber hinaus wird der in herkömmlichen Ölen bei 25 bis 35 Gew.-% liegende Gesamtgehalt an Aromaten durch Hydrierungen und/oder Hydrodesulfurierungen auf unter 22, zum Teil unter 18 und speziell unter 15 Gew.-% abgesenkt. Dadurch wird die Löslichkeit der bekannten Kaltfließverbesserer auf Basis von Ethylen-Co- und Terpolymeren, die gewöhnlich zwischen 10 und 15 mol-% Vinylester enthalten, negativ beeinflusst. Die schlechte Löslichkeit kann zum einen zu Wirkungsverlusten des Additivs und andererseits zu Filtrationsproblemen des additivierten Brennstofföls oberhalb des Cloud Points durch unvollständig gelöste Polymeranteile führen. In entschwefelten Mitteldestillaten mit niedrigem Gehalt an Aromaten haben sich daher die im Stand der Technik bekannten Ethylen-Vinylacetat-Copolymere wie auch Copolymere aus Ethylen und ungesättigten Estern verzweigter C₄-C₂₀-Fettalkohle bzw. -Säuren sowie die Terpolymere des Ethylens mit untergeordneten Mengen weiterer Monomere hinsichtlich Löslichkeit und Wirksamkeit als unbefriedigend herausgestellt.

Daher werden Additive gesucht, die eine gute Performance und gleichzeitig eine gute Löslichkeit in Mitteldestillaten mit niedrigem Schwefel- und Aromatengehalt auch bei niedrigen Blendingtemperaturen zeigen.

Überraschenderweise wurde gefunden, dass bestimmte Copolymere aus Ethylen, Vinylacetat und einem verzweigten Vinylester eine Lösung dieser Aufgabe darstellen.

Gegenstand der Erfindung sind daher Brennstofföle, enthaltend einen größeren Anteil Mitteldestillate mit einem Schwefelgehalt von höchstens 350 ppm und einem Aromatengehalt von höchstens 22 Gew.-%, sowie einen kleineren Anteil mindestens eines Copolymers aus Ethylen und Vinylestern, enthaltend
a) vom Ethylen abgeleitete bivalente Struktureinheiten der Formel 1

   -CH₂-CH₂- (1)
b) 5 bis 12 mol-% bivalente Struktureinheiten, welche aus den Comonomeren Pivalinsäurevinylester, Neononansäurevinylester, Neodecansäurevinylester und/oder Neoundecansäurevinylester stammen, und
c) 4 bis 13 mol-% bivalente Struktureinheiten der Formel 3 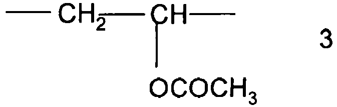 wobei die Summe der molaren Anteile an Struktureinheiten b) und denen der Formel 3 zwischen 12 und 16 mol-% liegt.

Ein weiterer Gegenstand der Erfindung ist ein Copolymer, wie oben definiert.

Ein weiterer Gegenstand der Erfindung ist die Verwendung von Copolymeren wie oben definiert zur Verbesserung des Kaltfließverhaltens von Mitteldestillaten mit einem Schwefelgehalt von höchstens 350 ppm und einem Aromatengehalt von höchstens 22 Gew.-%.

Ein weiterer Gegenstand der Erfindung ist ein Verfahren zur Verbesserung des Kaltfließverhaltens von Mitteldestillaten mit einem Schwefelgehalt von höchstens 350 ppm und einem Aromatengehalt von höchstens 22 Gew.-%, indem man ihm Copolymere wie oben definiert zusetzt.

Comonomere b) sind Pivalinsäurevinylester, Neononan-, Neodecan- und/oder Neoundecansäurevinylester. Der molare Anteil des verzweigten Vinylesters b) liegt bevorzugt zwischen 5 und 11 mol-%, speziell zwischen 6,5 und 9,4 mol-%. Der molare Anteil des Vinylacetats c) liegt bevorzugt zwischen 4,6 und 9 mol%.

Der molare Anteil des Ethylens a) liegt bevorzugt zwischen 79 und 88 mol-%, speziell zwischen 81 und 88 mol-%, beispielsweise zwischen 83 und 88 mol-% und insbesondere zwischen 84 und 88 mol-%.

Die erfindungsgemäßen Terpolymere können auch untergeordnete Mengen von beispielsweise bis zu 5 mol-%, bevorzugt bis zu 3 mol-% weiterer Comonomere enthalten. Geeignete weitere Comonomere sind insbesondere Olefine mit 3 bis 18 C-Atomen, beispielsweise Propen, n-Buten, iso-Buten, Penten, Hexen, Isohexen, Octen, Diisobutylen, Decen, Norbornen, Ester der Acryl- bzw. Methacrylsäure mit C₁-C₁₈-Alkoholen und C₁-C₁₈-Alkylvinylether.

Die erfindungsgemäßen Terpolymere haben bevorzugt Molekulargewichte (gemäß GPC gegen Poly(styrol)) von 3.000 bis 15.000 g/mol, insbesondere 4.000 bis 12.000 g/mol. Der mittels NMR bestimmte Verzweigungsgrad des Polymerrückgrats liegt vorzugsweise zwischen 2 und 9 CH₃/100 CH₂-Gruppen, insbesondere zwischen 2,5 und 5 CH₃/100 CH₂-Gruppen. Methylgruppen der Comonomere sind dabei nicht berücksichtigt.

Vorzugsweise haben die Copolymere Schmelzviskositäten bei 140°C von 20 bis 10.000 mPas, insbesondere von 30 bis 5000 mPas, speziell von 50 bis 2000 mPas.

Die Copolymere sind durch die üblichen Copolymerisationsverfahren wie beispielsweise Suspensionspolymerisation, Lösungspolymerisation, Gasphasenpolymerisation oder Hochdruckmassepolymerisation herstellbar. Bevorzugt ist dabei die Hochdruckmassepolymerisation bei Drucken von vorzugsweise 50 bis 400, insbesondere 100 bis 300 MPa und Temperaturen von vorzugsweise 50 bis 350°C, insbesondere 100 bis 250°C. Die Reaktion der Monomeren wird durch Radikale bildende Initiatoren (Radikalkettenstarter) eingeleitet. Zu dieser Substanzklasse gehören z.B. Sauerstoff, Hydroperoxide, Peroxide und Azoverbindungen wie Cumolhydroperoxid, t-Butylhydroperoxid, Dilauroylperoxid, Dibenzoylperoxid, Bis(2-ethylhexyl)peroxid-carbonat, t-Butylperpivalat, t-Butylpermaleinat, t-Butylperbenzoat, Dicumylperoxid, t-Butylcumylperoxid, Di-(t-butyl)peroxid, 2,2'-Azo-bis(2-methylpropionitril), 2,2'-Azo-bis(2-methylbutyronitril). Die Initiatoren werden einzeln oder als Gemisch aus zwei oder mehr Substanzen in Mengen von 0,01 bis 20 Gew.-%, vorzugsweise 0,05 bis 10 Gew.-%, bezogen auf das Monomerengemisch, eingesetzt.

Zur Einstellung des gewünschten Molekulargewichts werden dem Monomerengemisch bei Bedarf Polymerisationsregler zugesetzt. Je nach Art des Reglers und des angestrebten Molekulargewichts beträgt die Konzentration 0,05 bis 20 Gew.-%, bevorzugt 0,1 bis 10 Gew.-% bezogen auf das Monomerengemisch. Geeignete Regler sind beispielsweise Wasserstoff, gesättigte oder ungesättigte Kohlenwasserstoffe wie z.B. Propan oder Propen, Aldehyde wie z.B.

Propionaldehyd, n-Butyraldehyd oder iso-Butyraldehyd, Ketone wie z.B. Aceton, Methylethylketon, Methylisobutylketon, Cyclohexanon oder Alkohole wie z.B. Butanol.

Die Hochdruckmassepolymerisation wird in bekannten Hochdruckreaktoren, z.B. Autoklaven oder Rohrreaktoren, diskontinuierlich oder kontinuierlich durchgeführt, besonders bewährt haben sich Rohrreaktoren. Lösungsmittel wie aliphatische und/oder aromatische Kohlenwasserstoffe oder Kohlenwasserstoffgemische, Benzol oder Toluol, können im Reaktionsgemisch enthalten sein. Bevorzugt ist die lösungsmittelfreie Arbeitsweise. In einer bevorzugten Ausführungsform der Polymerisation wird das Gemisch aus den Monomeren, dem Initiator und, sofern eingesetzt, dem Moderator, einem Rohrreaktor über den Reaktoreingang sowie über einen oder mehrere Seitenäste zugeführt. Hierbei können die Monomerenströme unterschiedlich zusammengesetzt sein (EP-A-0 271 738, EP-A-0 922 716).

Die erfindungsgemäßen Additive werden Mineralölen oder Mineralöldestillaten in Form von Lösungen oder Dispersionen zugesetzt. Diese Lösungen oder Dispersionen enthalten vorzugsweise 1 bis 90, insbesondere 5 bis 80 Gew.-% der Copolymere. Geeignete Lösungs- oder Dispersionsmittel sind aliphatische und/oder aromatische Kohlenwasserstoffe oder Kohlenwasserstoffgemische, z.B. Benzinfraktionen, Kerosin, Decan, Pentadecan, Toluol, Xylol, Ethylbenzol oder kommerzielle Lösungsmittelgemische wie Solvent Naphtha, ^{®}Shellsoll AB, ^{®}Solvesso 150, ^{®}Solvesso 200, ^{®}Exxsol-, ^{®}ISOPAR- und ^{®}Shellsol D-Typen. Die angegebenen Lösemittelgemische enthalten unterschiedliche Mengen an aliphatischen und/oder aromatischen Kohlenwasserstoffen. Die Aliphaten können geradkettig (n-Paraffine) oder verzweigt sein (iso-Paraffine). Aromatische Kohlenwasserstoffe können mono-, di- oder polyzyklisch sein und gegebenenfalls einen oder mehrere Substituenten tragen. Gegebenenfalls können auch polare Lösungsvermittler wie z.B. Butanol, 2-Ethylhexanol, Decanol, iso-Decanol oder iso-Tridecanol, Benzoesäure, oder höhere aliphatische wie auch aromatische Ether und/oder Ester zugesetzt werden. Durch die Copolymere in ihren rheologischen Eigenschaften verbesserte Mineralöle oder Mineralöldestillate enthalten 0,001 bis 2, vorzugsweise 0,005 bis 0,5 Gew.-% der Copolymere, bezogen auf das Destillat.

Als Mitteldestillate bezeichnet man insbesondere solche Mineralöle, die durch Destillation von Rohöl gewonnen werden und im Bereich von 120 bis 400°C sieden, wie beispielsweise Kerosin, Jet-Fuel, Diesel und Heizöl. Die erfindungsgemäßen Brennstofföle enthalten weniger als 350 ppm, bevorzugt weniger als 200 ppm, insbesondere weniger als 50 ppm und speziell weniger als 10 ppm Schwefel.

Der Gesamtgehalt an Aromaten in den Mitteldestillaten ist durch Hydrierungen und/oder Hydrodesulfurierungen auf unter 22, vorzugsweise auf unter 18 und speziell auf unter 15 Gew.-% abgesenkt. Besonders vorteilhafte Ergebnisse zeigen die erfindungsgemäßen Additive in eng geschnittenen Mitteldestillaten mit einem Siedebereich 90-20 % von weniger als 110°C, speziell weniger als 100 °C. Bevorzugt ist ihre Verwendung weiterhin in paraffinreichen Mitteldestillaten mit gemäß DSC mehr als 3 Gew.-% ausgefallenen Paraffine bei 10°C unter Cloud Point. Bevorzugt ist ihre Verwendung weiterhin in Mitteldestillaten mit niedriger Dichte von weniger als 0,840 g/cm³ und speziell weniger als 0,835 g/cm³.

Die erfindungsgemäßen Additive zeigen in diesen Mitteldestillaten eine den bekannten Copolymeren aus Ethylen und längerkettigen, verzweigten Vinylestern überlegene Absenkung des CFPP-Wertes bei gleichzeitig verbesserter Löslichkeit. Sie können somit auch bei niedrigeren Temperaturen problemlos dem zu additivierenden Öl zugesetzt werden. Sie sind sowohl solchen Terpolymeren mit höherem Vinylacetatanteil bei gleichzeitig niedrigem Gehalt an längerkettigen Vinylestern (EP 0493769, EP 1007605) als auch solchen mit hohem Masseanteil an längerkettigen, verzweigten Vinylestern (EP 0890589) überlegen. Andererseits können sie auf Grund ihrer überlegenen Löslichkeit auch stark paraffinhaltigen Ölen in hohen Dosierraten von mehr als 500 ppm und speziell mehr als 1.000 ppm wie beispielsweise 1.500 bis 5.000 ppm zugesetzt werden, ohne die Filtrierbarkeit der additivierten Öle oberhalb des Cloud Points zu beeinträchtigen.

Die erfindungsgemäßen Additivmischungen sind des gleichen auch zur Verbesserung der Kaltfließeigenschaften von Biodiesel geeignet. Bei Biodiesel handelt es sich um Fettsäurealkylester aus Fettsäuren mit 14 bis 24 C-Atomen und Alkoholen mit 1 bis 4 C-Atomen. Gewöhnlich enthält ein größerer Teil der Fettsäuren ein, zwei oder drei Doppelbindungen. Besonders bevorzugt handelt es sich z.B. um Rapsölsäuremethylester und dessen Mischungen mit weiteren Pflanzenölsäureestern. Die erfindungsgemäßen Additive können mit gleichem Erfolg in Mischungen aus Fettsäuremethylestern und Mineralöldiesel eingesetzt werden. Derartige Mischungen enthalten bevorzugt bis zu 25 Gew.-%, insbesondere bis zu 10 Gew.-%, speziell bis zu 5 Gew.-% an Brennstofföl tierischen oder pflanzlichen Ursprungs.

Zur Herstellung von Additivpaketen für spezielle Problemlösungen können die Copolymere auch zusammen mit einem oder mehreren öllöslichen Co-Additiven eingesetzt werden, die bereits für sich allein die Kaltfließeigenschaften von Rohölen, Schmierölen oder Brennölen verbessern. Beispiele solcher Co-Additive sind weitere Copolymere aus Ethylen und olefinisch ungesättigten Verbindungen, polare stickstoffhaltige Verbindungen, Alkylphenol-Aldehydharze, Kammpolymere, Olefincopolymere und Polyoxyalkylenderivate.

So haben sich Mischungen der erfindungsgemäßen Additive mit Copolymerisaten hervorragend bewährt, die 60 bis 90 Gew.-% Ethylen und 10 bis 40 Gew.-% Vinylacetat oder Vinylpropionat enthalten. Nach einer weiteren Ausgestaltung der Erfindung setzt man die erfindungsgemäßen Additive in Mischung mit Ethylen-Terpolymeren ein, die zwei oder mehr Vinyl-, Acryl- und/oder Methacrylester enthalten. Besonders bewährt haben sich dabei Ethylen/Vinylacetat/Vinyl-2-ethylhexanoat-Terpolymere, Ethylen/Vinylacetat/ Neononansäurevinylester-Terpolymere und/oder Ethylen-Vinylacetat/ Neodecansäurevinylester-Terpolymere, die außer Ethylen 10 bis 35 Gew.-% Vinylacetat und 1 bis 25 Gew.-% des jeweiligen langkettigen Vinylesters enthalten. Weitere bevorzugte Copolymere enthalten neben Ethylen und 10 bis 35 Gew.-% Vinylestern noch 0,5 bis 20 Gew.-% Olefin mit 3 bis 10 C-Atomen wie z.B. Propen, Buten, Isobutylen, Diisobutylen, 4-Methylpenten oder Norbornen.

Ferner können die erfindungsgemäßen Polymere zusammen mit polaren stickstoffhaltigen Verbindungen eingesetzt werden, die die Größe der ausfallenden Paraffinkristalle weiter reduzieren und bewirken, dass die Paraffinpartikel sich nicht absetzen, sondern kolloidal mit deutlich reduziertem Sedimentationsbestreben dispergiert bleiben. Als Paraffindispergatoren haben sich öllösliche polare Verbindungen mit ionischen oder polaren Gruppen, z.B. Aminsalze und/oder Amide bewährt, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (vgl. US 4 211 534). Des gleichen sind Amide und Ammoniumsalze von Aminoalkylenpolycarbonsäuren wie Nitrilotriessigsäure oder Ethylendiamintetraessigsäure mit sekundären Aminen als Paraffindispergatoren geeignet. Andere Paraffindispergatoren sind Copolymere des Maleinsäureanhydrids und α,ß-ungesättigter Verbindungen, die gegebenenfalls mit primären Monoalkylaminen und/oder aliphatischen Alkoholen umgesetzt werden können (vgl. EP 0 154 177), die Umsetzungsprodukte von Alkenylspirobislactonen mit Aminen (vgl. EP 0 413 279 B1) und nach EP 0 606 055 A2 Umsetzungsprodukte von Terpolymerisasten auf Basis α,ß-ungesättigter Dicarbonsäureanhydride, α,ß-ungesättigter Verbindungen und Polyoxyalkylenether niederer ungesättigter Alkohole. Besonders bevorzugte Paraffindispergatoren enthalten Umsetzungsprodukte sekundärer Fettamine mit 8 bis 36 C-Atomen, insbesondere von Dicocosfettamin, Ditalgfettamin und Distearylamin mit Carbonsäuren oder deren Anhydriden.

So können die erfindungsgemäßen Additive in Mischung mit Alkylphenol-Aldehydharzen eingesetzt werden. Alkylphenol-Aldehyd-Harze sind beispielsweise im Römpp Chemie Lexikon, 9. Auflage, Thieme Verlag 1988-92, Band 4, S. 3351ff. beschrieben. Die Alkylreste des o- oder p-Alkylphenols können bei den im erfindungsgemäßen Verfahren einsetzbaren Alkylphenol-Aldehyd-Harzen gleich oder verschieden sein und besitzen 1 - 50, vorzugsweise 1 - 20, insbesondere 4 - 12 Kohlenstoffatome; bevorzugt handelt es sich um n-, iso- und tert.-Butyl, n- und isoPentyl, n- und iso-Hexyl, n- und iso-Octyl, n- und iso-Nonyl, n- und iso-Decyl, n- und iso-Dodecyl und Octadecyl. Der aliphatische Aldehyd im Alkylphenol-Aldehydharz besitzt vorzugsweise 1 - 4 Kohlenstoffatome. Besonders bevorzugte Aldehyde sind Formaldehyd, Acetaldehyd und Butyraldehyd, insbesondere Formaldehyd. Das Molekulargewicht der Alkylphenol-Aldehyd-Harze beträgt 400 - 10.000, bevorzugt 400 - 5000 g/mol. Voraussetzung ist hierbei, dass die Harze öllöslich sind.

In einer bevorzugten Ausführungsform der Erfindung handelt es sich bei diesen Alkylphenol-Formaldehydharzen um Oligo- oder Polymere mit einer repetitiven Einheit der Formel 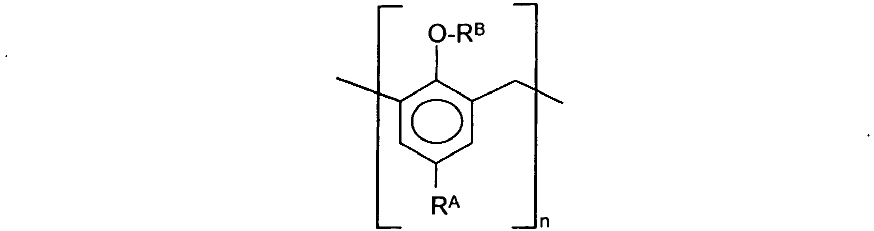 worin R^{A} für C₄-C₅₀-Alkyl oder -Alkenyl, R^{B} für Wasserstoff oder eine Polyoxyalkyleneinheit der Formel (A-O)ₚ-H, worin A eine C₂- bis C₄-Alkylengruppe darstellt, n für eine Zahl von 3 bis 100, bevorzugt 4 bis 20 und p für eine Zahl von 0 bis 50 steht.

Schließlich werden in einer weiteren Ausführungsform der Erfindung die erfindungsgemäßen Copolymere zusammen mit Kammpolymeren verwendet. Hierunter versteht man Polymere, bei denen Kohlenwasserstoffreste mit mindestens 8, insbesondere mindestens 10 Kohlenstoffatomen an einem Polymerrückgrat gebunden sind. Vorzugsweise handelt es sich um Homopolymere, deren Alkylseitenketten mindestens 8 und insbesondere mindestens 10 Kohlenstoffatome enthalten. Bei Copolymeren weisen mindestens 20 %, bevorzugt mindestens 30 % der Monomeren Seitenketten auf (vgl. Comb-like Polymers-Structure and Properties; N.A. Plate and V.P. Shibaev, J. Polym. Sci. Macromolecular Revs. 1974, 8, 117 ff). Beispiele für geeignete Kammpolymere sind z.B. Fumarat/Vinylacetat-Copolymere (vgl. EP 0 153 176 A1), Copolymere aus einem C₆-C₂₄-α-Olefin und einem N-C₆-C₂₂-Alkylmaleinsäureimid (vgl. EP 0 320 766), ferner veresterte Olefin/ Maleinsäureanhydrid-Copolymere, Polymere und Copolymere von α-Olefinen und veresterte Copolymere von Styrol und Maleinsäureanhydrid.

Kammpolymere können beispielsweise durch die Formel 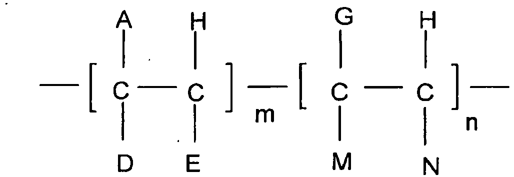 beschrieben werden. Darin bedeuten
- A: R', COOR', OCOR', R"-COOR' oder OR';
- D: H, CH₃, A oder R;
- E: H oder A;
- G: H, R", R"-COOR', einen Arylrest oder einen heterocyclischen Rest;
- M: H, COOR", OCOR", OR" oder COOH;
- N: H, R", COOR", OCOR, COOH oder einen Arylrest;
- R': eine Kohlenwasserstoffkette mit 8-150 Kohlenstoffatomen;
- R": eine Kohlenwasserstoffkette mit 1 bis 24 Kohlenstoffatomen;
- m: eine Zahl zwischen 0,4 und 1,0; und
- n: eine Zahl zwischen 0 und 0,6.

Für die Verwendung als weitere Kaltfließverbesserer ebenfalls geeignete Olefincopolymere können sich direkt von monoethylenisch ungesättigten Monomeren ableiten oder indirekt durch Hydrierung von Polymeren, die sich von mehrfach ungesättigten Monomeren wie Isopren oder Butadien ableiten, hergestellt werden. Bevorzugte Copolymere enthalten neben Ethylen Struktureinheiten, die sich von α-Olefinen mit 3 bis 24 C-Atomen ableiten und Molekulargewichte von bis zu 120.000 aufweisen. Bevorzugte α-Olefine sind Propylen, Buten, Isobuten, n-Hexen, Isohexen, n-Octen, Isoocten, n-Decen, Isodecen. Der Comonomergehalt an Olefinen liegt bevorzugt zwischen 15 und 50 mol-%, besonders bevorzugt zwischen 20 und 45 mol-% und speziell zwischen 30 und 35 mol%. Diese Copolymeren können auch geringe Mengen, z. B. bis zu 10 mol-% weiterer Comonomere wie z.B. nicht endständige Olefine oder nicht konjugierte Olefine enthalten. Bevorzugt sind Ethylen-Propylen-Copolymere.

Die Olefincopolymere können nach bekannten Methoden hergestellt werden, z.B. mittels Ziegler- oder Metallocen-Katalysatoren.

Weitere geeignete Fließverbesserer sind Polyoxyalkylenverbindungen wie beispielsweise Ester, Ether und Ether/Ester, die mindestens einen Alkylrest mit 12 bis 30 C-Atomen tragen. Wenn die Alkylgruppen von einer Säure stammen, stammt der Rest von einem mehrwertigen Alkohol (Polyol); kommen die Alkylreste von einem Fettalkohol, so stammt der Rest der Verbindung von einer Polysäure.

Geeignete Polyole sind vorzugsweise Polyethylenglykole, Polypropylenglykole, Polybutylenglykole und deren Mischpolymerisate mit einem Molekulargewicht von ca. 100 bis ca. 5000, vorzugsweise 200 bis 2000. Weiterhin geeignet sind Alkoxilate von Polyolen, wie beispielsweise von Glycerin, Trimethylolpropan, Pentaerythrit, Neopentylglykol, sowie die daraus durch Kondensation zugänglichen Oligomere mit 2 bis 10 Monomereinheiten, wie z.B. Polyglycerin. Bevorzugte Alkoxilate sind solche mit 1 bis 100, insbesondere 5 bis 50 mol Ethylenoxid, Propylenoxid und/oder Butylenoxid pro mol Polyol. Ester sind besonders bevorzugt.

Fettsäuren mit 12 bis 26 C-Atomen sind bevorzugt zur Umsetzung mit den Polyolen zur Bildung der Esteradditive, wobei bevorzugt C₁₈- bis C₂₄-Fettsäuren verwendet werden, speziell Stearin- und Behensäure. Die Ester können auch durch Veresterung von polyoxyalkylierten Alkoholen hergestellt werden. Bevorzugt sind vollständig veresterte polyoxyalkylierte Poylole mit Molekulargewichten von 150 bis 2000, bevorzugt 200 bis 600. Besonders geeignet sind PEG-600-Dibehenat und Glycerin-20-Ethylenglykol-Tribehenat.

Das Mischungsverhältnis (in Gewichtsteilen) der erfindungsgemäßen Additive mit Ethylen-Copolymeren, polaren stickstoffhaltigen Verbindungen, Demulgatoren, Entschäumer, Alkylphenol-Aldehydharzen, Kammpolymeren, Olefincopolymeren bzw. Polyoxyalkylenverbindungen beträgt jeweils 1:10 bis 20:1, vorzugsweise 1:1 bis 10:1.

Die Additivmischungen können allein oder auch zusammen mit anderen Zusatzstoffen verwendet werden, beispielsweise mit Entwachsungshilfsmitteln, Korrosionsinhibitoren, Antioxidantien, Lubricity-Additiven, Dehazern, Leitfähigkeitsverbesserern, Cetanzahlverbesserern oder Schlamminhibitoren.

### Beispiele

### Folgende Additive wurden hergestellt:

Die Herstellung der Polymeren erfolgte wie folgt: Ethylen, Vinylacetat und Neodecansäurevinylester (VeoVa) bzw. 2-Ethylhexylvinylester (EHV) wurden unter Zusatz von Propionaldehyd als Molekulargewichtsregler (Moderator), in einem Hochdruckautoklaven polymerisiert. Hierzu wurde das Monomerengemisch, dem als Initiator Bis(2-ethylhexyl)-peroxidicarbonat gelöst in Testbenzin (15 gew.-%ige Lösung) zugesetzt worden ist, unter Reaktionsdruck von 150 MPa in den Reaktor bei der in Tabelle 1a angegebenen Temperatur eingespeist. Die Verweilzeit der Reaktanden im Autoklaven betrug ca. 90 Sekunden. In Tabelle 1a sind die Polymerisationsbedingungen, in Tabelle 1b die Eigenschaften der erhaltenen Terpolymerisate zusammengestellt.

Der Vinylacetatgehalt wurde durch Pyrolyse des Polymerisats bestimmt. Hierzu wurden 100 mg des Polymerisats mit 200 mg reinem Polyethylen in einem Pyrolysekolben 5 Minuten bei 450°C in einem geschlossenen System unter Vakuum thermisch gespalten und die Spaltgase in einem 250 ml-Rundkolben aufgefangen. Das Spaltprodukt Essigsäure wird mit einer NaJ/KJO₃-Lösun umgesetzt und mit Na₂S₂O₃-Lösung das freiwerdende Jod titriert.

Die Bestimmung des Verzweigungsgrades der Polymerisate erfolgte durch ¹H-NMR-Spektroskopie (Messungen in C₂D₂Cl₄ bei 333 K; Spektrometer AM 360, Fa. Bruker). Unter Verzweigungsgrad wird die Anzahl der CH₃-Gruppen je 100 CH₂-Gruppen des Poly(ethylens) mit Ausnahme der aus den Säureresten der Vinylester stammenden Methylgruppen verstanden.

Die Bestimmung der Viskosität erfolgte gemäß ISO 3219 (B) mit einem Rotationsviskosimeter (Haake RV 20) mit Platte-Kegel-Meßsystem bei 140°C.

**Tabelle 1a: Herstellung der Terpolymerisate**

| Beispiel Nr. | Einsatz (Gew.-%) | | | Temperatur °C | Druck MPa |
|---|---|---|---|---|---|
| | Ethylen | Vinylacetat | Verzweigtes Monomer | | |
| P1 | 50,5 | 12,0 | 37,5 VeoVa | 190 | 1600 |
| P2 | 51,3 | 11,1 | 37,6 VeoVa | 190 | 1750 |
| P3 | 50,5 | 12,2 | 37,3 (VeoVa) | 190 | 1600 |
| P4 | 51,2 | 11,2 | 37,6 (VeoVa) | 160 | 1750 |
| P5 | 48,1 | 14,5 | 37,4 (VeoVa) | 190 | 1600 |
| P6 | 46,1 | 10,6 | 43,3 (VeoVa) | 220 | 1550 |
| P7 | 45,1 | 17,4 | 37,5 (VeoVa) | 190 | 1600 |
| P8 | 42,5 | 20,2 | 37,3 (VeoVa) | 190 | 1600 |
| P9 | 49,6 | 29,4 | 21,0 (VeoVa) | 160 | 1750 |
| P10 | 47,2 | 30,9 | 21,9 (VeoVa) | 220 | 1525 |
| P11 (Vgl.) | 48,0 | 18,4 | 33,6 (EHV) | 190 | 1550 |

**Tabelle 1b: Charakterisierung der Terpolymerisate**

| Beispiel Nr. | Vinylacetat | Verzweigtes Monomer | ∑ Comonomere | | V₁₄₀ |
|---|---|---|---|---|---|
| | [mol-%] | [mol-%] | [mol-%] | [Gew.-%] | [mPas] |
| P1 | 4,8 | 7,6 (VeoVa 10) | 12,4 | 44,0 | 147 |
| P2 | 4,6 | 8,0 (VeoVa 10) | 12,6 | 44,8 | 194 |
| P3 | 4,7 | 7,7 (VeoVa 10) | 12,5 | 43,9 | 63 |
| P4 | 4,7 | 8,3 (VeoVa 10) | 13,0 | 45,7 | 171 |
| P5 | 5,7 | 7,8 (VeoVa 10) | 13,5 | 45,7 | 166 |
| P6 | 4,5 | 9,3 (VeoVa 10) | 13,9 | 48,1 | 167 |
| P7 | 7,0 | 7,9 (VeoVa 10) | 15,0 | 47,7 | 167 |
| P8 | 7,4 | 7,8 (VeoVa 10) | 15,2 | 47,8 | 186 |
| P9 | 10,8 | 5,1 (VeoVa 10) | 15,9 | 46,2 | 128 |
| P10 | 11,2 | 4,6 (VeoVa 10) | 15,8 | 44,2 | 142 |
| P11 (Vgl.) | 7,2 | 7,3 (EHV) | 14,5 | 43,8 | 132 |
| P12 (Vgl.) | 8,7 | 1,6 (EHV) | 10,3 | 28,8 | 168 |
| P13 (Vgl.) | 2,9 | 7,0 (EHV) | 9,9 | 30,0 | 218 |
| P14 (Vgl.) | 13,7 | 1,4 (VeoVa 10) | 15,1 | 37,8 | 97 |
| P15 (Vgl.) | 13,3 | - | 13,3 | 32,0 | 140 |
| P16 (Vgl.) | - | 7,5 (VeoVa 10) | 7,5 | 36,4 | 176 |

Als Vergleich werden die Wirksamkeiten verschiedener handelsüblicher Ethylen-Vinylacetat- und Ethylen-VeoVa-Copolymere sowie verschiedener Ethylen-Vinylacetat-VeoVa- und Ethylen-Vinylacetat-2-Ethylhexylvinylester-Terpolymerisate (EHV) wiedergegeben.

### Charakterisierung der Testöle:

Die Bestimmung der Siedekenndaten erfolgte gemäß ASTM D-86, die Bestimmung des CFPP-Werts gemäß EN 116 und die Bestimmung des Cloud Points gemäß ISO 3015. Die Siedeanalyse erfolgt gemäß ASTM D 86.

**Tabelle 2: Kenndaten der Testöle**

| | | | Testöl 1 | Testöl 2 | Testöl 3 | Testöl 4 (Vgl.) |
|---|---|---|---|---|---|---|
| Destillation | | | | | | |
| | IBP | [°C] | 202 | 170 | 191 | 169 |
| | 20% | [°C] | 257 | 190 | 223 | 219 |
| | 90% | [°C] | 346 | 297 | 319 | 339 |
| | FBP | [°C] | 376 | 328 | 339 | 369 |
| Cloud Point [°C] | | | -9,8 | -22,2 | -10,0 | -9,3 |
| CFPP | | [°C] | -14 | -27 | -11 | -14 |
| Paraffin 10° u. CP (DSC) | | | 4,2 % | 3,6 % | 4,5 % | 2,7 % |
| Dichte 15°C | | [g/cm³] | 0,828 | 0,831 | 0,828 | 0,842 |
| Schwefelgehalt | | [ppm] | 8 | 26 | 9 | 420 |
| Aromatengehalt | | [Gew.-%] | 14,3 | 18,3 | 16,7 | 24,6 |
| davon mono | | [Gew.-%] | 12,6 | 15,7 | 15,1 | 20,6 |
| | di | [Gew.-%] | 1,5 | 2,2 | 1,2 | 3,4 |
| | poly | [Gew.-%] | 0,2 | 0,3 | 0,4 | 0,6 |

### Löslichkeit der Additive

Zur Prüfung der Löslichkeit der Additive im Mitteldestillat wurden 500 ml Öl bei 25°C mit 500 ppm einer 65 %igen Suspension des zu prüfenden Additivs (25°C) versetzt. Es wurde 30 Sekunden lang intensiv geschüttelt und anschließend mit einem Unterdruck von 800 mbar über ein Membranfilter (Cellulosenitrat, Porenweite 0,8 µm, Ø = 47 mm) filtriert. Filtrationszeiten von über 120 sec. werden als nicht filtrierbar betrachtet, wobei das in dieser Zeit erhaltene Filtratvolumen ein zusätzliches Maß für die Löslichkeit des Additivs gibt.

**Tabelle 3: Filtrierbarkeit additivierter aromatenarmer Mitteldestillate**

| Beispiel | Additiv | Testöl | Temperatur Öl | Zeit [sec] | Volumen [ml] | |
|---|---|---|---|---|---|---|
| 1 | P1 | 1 | 25°C | 65 | 500 | |
| 2 | P2 | 1 | 25°C | 71 | 500 | |
| 3 | P3 | 1 | 25°C | 69 | 500 | |
| 4 | P4 | 1 | 25°C | 64 | 500 | |
| 5 | P5 | 1 | 25°C | 67 | 500 | |
| 6 | P6 | 1 | 25°C | 64 | 500 | |
| 7 | P7 | 1 | 25°C | 63 | 500 | |
| 8 | P8 | 1 | 25°C | 66 | 500 | |
| 9 | P9 | 1 | 25°C | 78 | 500 | |
| 10 (Vgl.) | P10 | 1 | 25°C | 68 | 500 | |
| 11 (Vgl.) | P11 | 1 | 25 °C | 82 | 500 | |
| 12 (Vgl.) | P12 | 1 | 25°C | >120 | ca. 400 | |
| 13 (Vgl.) | P13 | 1 | 25°C | >120 | ca. 400 | |
| 14 (Vgl.) | P14 | 1 | 25°C | 115 | 500 | |
| 15 (Vgl.) | P15 | 1 | 25°C | >120 | ca. 180 | |
| 16 (Vgl.) | P16 | 1 | 25°C | nicht löslich | | |
| 17 (Vgl.) | - | 1 | 25°C | 60 | | 500 ml |

**Tabelle 3: Filtrierbarkeit additivierter aromatenreicher Mitteldestillate (Vergleichsversuche)**

| Beispiel | Additiv | Testöl | Temperatur Öl | Zeit [sec] | Volumen [ml] |
|---|---|---|---|---|---|
| 18 (Vgl.) | P1 | 4 | 25°C | 56 | 500 ml |
| 19 (Vgl.) | P3 | 4 | 25°C | 59 | 500 ml |
| 20 (Vgl.) | P8 | 4 | 25°C | 51 | 500 ml |
| 21 (Vgl.) | P12 | 4 | 25°C | 115 | 500 ml |
| 22 (Vgl.) | P14 | 4 | 25°C | 56 | 500 ml |
| 23 (Vgl.) | P15 | 4 | 25°C | 110 | 500 ml |
| 24 (Vgl.) | - | 4 | 25°C | 47 | 500 ml |

Aus dem Vergleich der Ergebnisse in Tabelle 3 zu Testöl 1 mit denen zu Testöl 4 wird deutlich, dass die erfindungsgemäßen Copolymere ihre besondere Wirksamkeit gerade in den erfindungsgemäß definierten Brennstoffölen entfalten, wohingegen in Brennstoffölen abweichender Charakteristik die aufgabengemäß zu lösenden Filtrationsprobleme nicht auftreten.

### Wirksamkeit der Terpolymerisate als Kaltfließverbesserer

In Tabellen 4 bis 6 wird die Wirksamkeit der nach den Herstellungsbeispielen erhaltenen Ethylen-Vinylacetat-VeoVa- und Ethylen-Vinylacetat-2-Ethylhexylvinylester-Terpolymerisate als Additive für Mineralöle und Mineralöldestillate an Hand des CFPP-Tests (Cold Filter Plugging Test nach EN 116) beschrieben. Die Additive werden als 65 %ige Suspensionen in Kerosin eingesetzt:

**Tabelle 4: CFPP-Wirksamkeit in Testöl 1**

| Beispiel Nr. | Terpolymer | 400 ppm | 800 ppm | 1200 ppm |
|---|---|---|---|---|
| 25 | P1 | -23 | -25 | -28 |
| 26 | P2 | -22 | -27 | -29 |
| 27 | P4 | -23 | -24 | -27 |
| 28 | P6 | -22 | -26 | -28 |
| 29 | P7 | -22 | -25 | -27 |
| 30 | P9 | -22 | -26 | -27 |
| 31 | P10 | -21 | -25 | -28 |
| 32 (Vgl.) | P11 | -20 | -26 | -28 |
| 33 (Vgl.) | P12 | -20 | -23 | -25 |
| 34 (Vgl.) | P13 | -21 | -23 | -25 |
| 35 (Vgl.) | P14 | -22 | -26 | -26 |
| 36 (Vgl.) | P15 | -24 | -25 | -26 |

**Tabelle 5: CFPP-Wirksamkeit in Testöl 2**

| Beispiel Nr. | Terpolymer | 350 ppm | 700 ppm | 1000 ppm |
|---|---|---|---|---|
| 37 | P1 | -30 | -32 | -38 |
| 38 | P2 | -29 | -32 | -37 |
| 39 | P3 | -29 | -34 | -35 |
| 40 | P4 | -30 | -32 | -37 |
| 41 | P5 | -28 | -37 | -40 |
| 42 | P6 | -30 | -34 | -39 |
| 43 | P7 | -31 | -38 | -38 |
| 44 | P8 | -29 | -40 | -42 |
| 45 | P9 | -30 | -35 | -38 |
| 46 | P10 | -30 | -34 | -36 |
| 47 (Vgl.) | P11 | -28 | -31 | -32 |
| 48 (Vgl.) | P13 | -23 | -26 | -28 |
| 49 (Vgl.) | P14 | -22 | -23 | -22 |
| 50 (Vgl.) | P15 | -22 | -23 | -26 |
| 51 (Vgl.) | P16 | -22 | -22 | -23 |

**Tabelle 6: CFPP-Wirksamkeit in Testöl 3**

| Beispiel Nr. | Terpolymer | 800 ppm | 1200 ppm |
|---|---|---|---|
| 52 | P2 | -24 | -26 |
| 53 | P3 | -25 | -27 |
| 54 | P5 | -23 | -25 |
| 55 | P8 | -24 | -26 |
| 56 | P9 | -22 | -23 |
| 57 | P10 | -23 | -24 |
| 58 (Vgl.) | P11 | -18 | -21 |
| 59 (Vgl.) | P12 | -21 | -21 |
| 60 (Vgl.) | P13 | -21 | -22 |
| 61 (Vgl.) | P14 | -20 | -21 |

### Liste der verwendeten Handelsbezeichnungen

| | |
|---|---|
| Solvent Naphtha | aromatische Lösemittelgemische mit Siedebereich 180 |
| ^{®}Shellsol AB | bis 210°C |
| ^{®}Solvesso 150 | |
| | |
| ^{®}Solvesso 200 | aromatisches Lösemittelgemisch mit Siedebereich 230 bis 287°C |
| | |
| ^{®}Exxsol | Dearomatisierte Lösemittel in verschiedenen Siedebereichen, beispielsweise ^{®}Exxsol D60: 187 bis 215°C |
| | |
| ^{®}ISOPAR (Exxon) | isoparaffinische Lösemittelgemische in verschiedenen Siedebereichen, beispielsweise ^{®}ISOPAR L: 190 bis 210°C |
| | |
| ^{®}Shellsol D | hauptsächlich aliphatische Lösemittelgemische in verschiedenen Siedebereichen |

## Patentansprüche

1. Brennstofföle, enthaltend einen größeren Anteil Mitteldestillate mit einem Schwefelgehalt von höchstens 350 ppm und einem Aromatengehalt von höchstens 22 Gew.-%, sowie einen kleineren Anteil mindestens eines Copolymers aus Ethylen und Vinylestern, enthaltend
a) vom Ethylen abgeleitete bivalente Struktureinheiten der Formel 1
-CH₂-CH₂- (1)
b) 5 bis 12 mol-% bivalente Struktureinheiten, welche aus den Comonomeren Pivalinsäurevinylester, Neononansäurevinylester, Neodecansäurevinylester und/oder Neoundecansäurevinylester stammen, und
c) 4 bis 13 mol-% bivalente Struktureinheiten der Formel 3 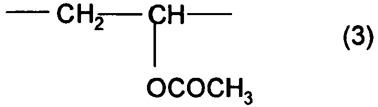 wobei die Summe der molaren Anteile an Struktureinheiten b) und denen der Formel 3 zwischen 12 und 16 mol-% liegt.

2. Brennstofföle nach Anspruch 1, worin der molare Anteil des verzweigten Vinylesters b) zwischen 5 und 11 mol-% liegt.

3. Brennstofföle nach Anspruch 1 und/oder 2, worin der molare Anteil des Vinylacetats c) zwischen 4,6 und 9 mol-% liegt.

4. Brennstofföle nach einem oder mehreren der Ansprüche 1 bis 3, worin die Copolymere neben den als a), b) und c) bezeichneten Struktureinheiten bis zu 5 mol-% weiterer Comonomere ausgewählt aus Olefinen mit 3 bis 18 C-Atomen, Estern der Acryl- bzw. Methacrylsäure mit C₁-C₁₈-Alkoholen und C₁-C₁₈-Alkylvinylethern enthalten.

5. Brennstofföle nach einem oder mehreren der Ansprüche 1 bis 4, worin die Copolymere Molekulargewichte (gemäß GPC gegen Poly(styrol)) von 3.000 bis 15.000 g/mol aufweisen.

6. Brennstofföle nach einem oder mehreren der Ansprüche 1 bis 5, worin der mittels NMR bestimmte Verzweigungsgrad des Copolymerrückgrats zwischen 2 und 9 CH₃/100 CH₂-Gruppen liegt, wobei die Methylgruppen der Comonomere dabei nicht berücksichtigt werden.

7. Brennstofföle nach einem oder mehreren der Ansprüche 1 bis 6, worin die Copolymere Schmelzviskositäten bei 140°C von 20 bis 10.000 mPas aufweisen.

8. Brennstofföle nach einem oder mehreren der Ansprüche 1 bis 7, worin der Gesamtgehalt an Aromaten im Mitteldestillat unter 18 Gew.-% liegt.

9. Brennstofföle nach einem oder mehreren der Ansprüche 1 bis 8, worin das Mitteldestillat einen Siedebereich 90-20 % von weniger als 110°C aufweist.

10. Brennstofföle nach einem oder mehreren der Ansprüche 1 bis 9, worin das Mitteldestillat einen Paraffingehalt gemäß DSC von mehr als 3 Gew.-% ausgefallenen Paraffinen bei 10°C unter Cloud Point aufweist.

11. Brennstofföle nach einem oder mehreren der Ansprüche 1 bis 10, worin das Mitteldestillat eine Dichte von weniger als 0,840 g/cm³ aufweist.

12. Brennstofföle nach einem oder mehreren der Ansprüche 1 bis 11, worin das Mitteldestillat zusätzlich mindestens ein weiteres Ethylen-Vinylester-Copolymer enthält.

13. Brennstofföle nach einem oder mehreren der Ansprüche 1 bis 11, worin das Mitteldestillat zusätzlich mindestens eine polare stickstoffhaltige Verbindung enthält.

14. Brennstofföle nach einem oder mehreren der Ansprüche 1 bis 11, worin das Mitteldestillat zusätzlich mindestens ein Alkylphenol-Aldehydharz enthält.

15. Brennstofföle nach einem oder mehreren der Ansprüche 1 bis 11, worin das Mitteldestillat zusätzlich mindestens ein Kammpolymer enthält

16. Brennstofföle nach einem oder mehreren der Ansprüche 1 bis 11, worin das Mitteldestillat zusätzlich mindestens ein Polyoxyalkylenderivat enthält

17. Copolymer aus Ethylen und Vinylestern, enthaltend
a) vom Ethylen abgeleitete bivalente Struktureinheiten der Formel 1
-CH₂-CH₂- (1)
b) 5 bis 12 mol-% bivalente Struktureinheiten, welche aus den Comonomeren Pivalinsäurevinylester, Neononansäurevinylester, Neodecansäurevinylester und/oder Neoundecansäurevinylester stammen, und
c) 4 bis 13 mol-% bivalente Struktureinheiten der Formel 3 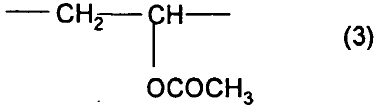 wobei die Summe der molaren Anteile an Struktureinheiten b) und denen der Formel 3 zwischen 12 und 16 mol-% liegt.

18. Verwendung von Copolymeren enthaltend
a) vom Ethylen abgeleitete bivalente Struktureinheiten der Formel 1
-CH₂-CH₂- (1)
b) 5 bis 12 mol-% bivalente Struktureinheiten, welche aus den Comonomeren Pivalinsäurevinylester, Neononansäurevinylester, Neodecansäurevinylester und/oder Neoundecansäurevinylester stammen, und
c) 4 bis 13 mol-% bivalente Struktureinheiten der Formel 3 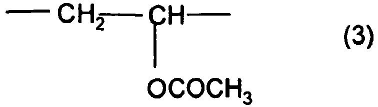 wobei die Summe der molaren Anteile an Struktureinheiten b) und denen der Formel 3 zwischen 12 und 16 mol-% liegt, zur Verbesserung des Kaltfließverhaltens von Mitteldestillaten mit einem Schwefelgehalt von höchstens 350 ppm und einem Aromatengehalt von höchstens 22 Gew.-%.

## Claims

1. A fuel oil comprising a larger proportion of middle distillates having a sulfur content of at most 350 ppm and an aromatics content of at most 22% by weight, and also a smaller proportion of at least one copolymer of ethylene and vinyl esters, said copolymer containing
a) bivalent structural units derived from ethylene of the formula 1
-CH₂-CH₂- (1)
b) from 5 to 12 mol% of bivalent structural units which are derived from the comonomers vinyl pivalate, vinyl neononanoate, vinyl neodecanoate and/or vinyl neoundecanoate, and
c) from 4 to 13 mol% of bivalent structural units of the formula 3 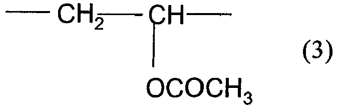 and the sum of the molar proportions of structural units b) and those of the formula 3 being between 12 and 16 mol%.

2. A fuel oil as claimed in claim 1, wherein the molar proportion of the branched vinyl ester b) is between 5 and 11 mol%.

3. A fuel oil as claimed in claim 1 and/or 2, wherein the molar proportion of vinyl acetate c) is between 4.6 and 9 mol%.

4. A fuel oil as claimed in one or more of claims 1 to 3, wherein the copolymers, in addition to the structural units referred to as a), b) and c), contain up to 5 mol% of further comonomers selected from olefins having from 3 to 18 carbon atoms, esters of acrylic acid or methacrylic acid with C₁-C₁₈-alcohols and C₁-C₁₈-alkyl vinyl ethers.

5. A fuel oil as claimed in one or more of claims 1 to 4, wherein the copolymers have molecular weights (by GPC against poly(styrene)) of from 3000 to 15 000 g/mol.

6. A fuel oil as claimed in one or more of claims 1 to 5, wherein the degree of branching of the copolymer backbone determined by means of NMR is between 2 and 9 CH₃/100 CH₂ groups, not taking into account the methyl groups of the comonomers.

7. A fuel oil as claimed in one or more of claims 1 to 6, wherein the copolymers have melt viscosities at 140°C of from 20 to 10 000 mPas.

8. A fuel oil as claimed in one or more of claims 1 to 7, wherein the total content of aromatics in the middle distillate is below 18% by weight.

9. A fuel oil as claimed in one or more of claims 1 to 8, wherein the middle distillate has a 90-20% boiling range of less than 110°C.

10. A fuel oil as claimed in one or more of claims 1 to 9, wherein the middle distillate has a paraffin content by DSC of more than 3% by weight of precipitated paraffins at 10°C below the cloud point.

11. A fuel oil as claimed in one or more of claims 1 to 10, wherein the middle distillate has a density of less than 0.840 g/cm³.

12. A fuel oil as claimed in one or more of claims 1 to 11, wherein the middle distillate additionally comprises at least one further ethylene-vinyl ester copolymer.

13. A fuel oil as claimed in one or more of claims 1 to 11, wherein the middle distillate additionally comprises at least one polar nitrogen compound.

14. A fuel oil as claimed in one or more of claims 1 to 11, wherein the middle distillate additionally comprises at least one alkylphenol-aldehyde resin.

15. A fuel oil as claimed in one or more of claims 1 to 11, wherein the middle distillate additionally comprises at least one comb polymer.

16. A fuel oil as claimed in one or more of claims 1 to 11, wherein the middle distillate additionally comprises at least one polyoxyalkylene derivative.

17. A copolymer of ethylene and vinyl esters comprising
a) bivalent structural units derived from ethylene of the formula 1
-CH₂-CH₂- (1)
b) from 5 to 12 mol% of bivalent structural units which are derived from the comonomers vinyl pivalate, vinyl neononanoate, vinyl neodecanoate and/or vinyl neoundecanoate, and
c) from 4 to 13 mol% of bivalent structural units of the formula 3 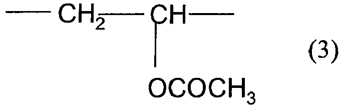 and the sum of the molar proportions of structural units b) and those of the formula 3 being between 12 and 16 mol%.

18. The use of copolymers comprising
a) bivalent structural units derived from ethylene of the formula 1
-CH₂-CH₂- (1)
b) from 5 to 12 mol% of bivalent structural units which are derived from the comonomers vinyl pivalate, vinyl neononanoate, vinyl neodecanoate and/or vinyl neoundecanoate, and
c) from 4 to 13 mol% of bivalent structural units of the formula 3 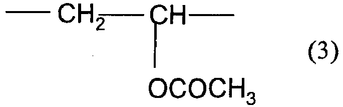 and the sum of the molar proportions of structural units b) and those of the formula 3 being between 12 and 16 mol%, for improving the cold flow behavior of middle distillates having a sulfur content of at most 350 ppm and an aromatics content of at most 22% by weight.

## Revendications

1. Huiles combustibles, contenant une plus grande proportion de distillats moyens ayant une teneur en soufre d'au plus 350 ppm et une teneur en composés aromatiques d'au plus 22 % en poids, ainsi qu'une plus petite proportion d'au moins un copolymère d'éthylène et d'esters de vinyle, contenant
a) des unités structurales bivalentes dérivées d'éthylène de formule 1
**-CH₂-CH₂-** **(1)**
b) 5 à 12 % en moles d'unités structurales bivalentes, qui proviennent des comonomères ester vinylique de l'acide pivalique, ester vinylique de l'acide néononanoïque, ester vinylique de l'acide néodécanoïque et/ou ester vinylique de l'acide néoundécanoïque, et
c) 4 à 13 % en moles d'unités structurales bivalentes de formule 3 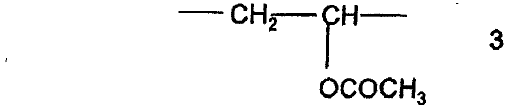 la somme des proportions molaires des unités structurales b) et de celles de formule 3 étant comprise entre 12 et 16 % en moles.

2. Huiles combustibles selon la revendication 1, dans lesquelles la proportion molaire de l'ester de vinyle ramifié b) est comprise entre 5 et 11 % en moles.

3. Huiles combustibles selon la revendication 1 et/ou 2, dans lesquelles la proportion molaire de l'acétate de vinyle c) est comprise entre 4,6 et 9 % en moles.

4. Huiles combustibles selon une ou plusieurs des revendications 1 à 3, dans lesquelles les copolymères contiennent en plus des unités structurales désignées par a), b) et c) jusqu'à 5 % en moles d'autres comonomères choisis parmi les oléfines de 3 à 18 atomes C, les esters de l'acide acrylique ou méthacrylique avec des alcools en C₁-C₁₈ et les éthers alkylvinyliques en C₁-C₁₈.

5. Huiles combustibles selon une ou plusieurs des revendications 1 à 4, dans lesquelles les copolymères présentent des poids moléculaires (selon CPG contre le poly(styrène) de 3 000 à 15 000 g/mol.

6. Huiles combustibles selon une ou plusieurs des revendications 1 à 5, dans lesquelles le degré de ramification déterminé par RMN du squelette copolymère est compris entre 2 et 9 groupes CH₃/100 groupes CH₂, les groupes méthyle des comonomères n'étant pas pris en compte.

7. Huiles combustibles selon une ou plusieurs des revendications 1 à 6, dans lesquelles les copolymères présentent des viscosités à l'état fondu à 140 °C de 20 à 10 000 mPas.

8. Huiles combustibles selon une ou plusieurs des revendications 1 à 7, dans lesquelles la teneur totale en composés aromatiques dans le distillat moyen est inférieure à 18 % en poids.

9. Huiles combustibles selon une ou plusieurs des revendications 1 à 8, dans lesquelles le distillat moyen présente une plage d'ébullition 90-20 % de moins de 110 °C.

10. Huiles combustibles selon une ou plusieurs des revendications 1 à 9, dans lesquelles le distillat moyen présente une teneur en paraffines selon l'ACD de plus de 3 % en poids de paraffines précipitées à 10 °C en dessous du point de trouble.

11. Huiles combustibles selon une ou plusieurs des revendications 1 à 10, dans lesquelles le distillat moyen présente une densité de moins de 0,840 g/cm³.

12. Huiles combustibles selon une ou plusieurs des revendications 1 à 11, dans lesquelles le distillat moyen contient en outre au moins un copolymère d'éthylène-ester de vinyle supplémentaire.

13. Huiles combustibles selon une ou plusieurs des revendications 1 à 11, dans lesquelles le distillat moyen contient en outre au moins un composé azoté polaire.

14. Huiles combustibles selon une ou plusieurs des revendications 1 à 11, dans lesquelles le distillat moyen contient en outre au moins une résine d'alkylphénol-aldéhyde.

15. Huiles combustibles selon une ou plusieurs des revendications 1 à 11, dans lesquelles le distillat moyen contient en outre au moins un polymère en peigne.

16. Huiles combustibles selon une ou plusieurs des revendications 1 à 11, dans lesquelles le distillat moyen contient en outre au moins un dérivé de polyoxyalkylène.

17. Copolymère d'éthylène et d'esters de vinyle, contenant
a) des unités structurales bivalentes dérivées d'éthylène de formule 1
**-CH₂-CH₂-** **(1)**
b) 5 à 12 % en moles d'unités structurales bivalentes, qui proviennent des comonomères ester vinylique de l'acide pivalique, ester vinylique de l'acide néononanoïque, ester vinylique de l'acide néodécanoïque et/ou ester vinylique de l'acide néoundécanoïque, et
c) 4 à 13 % en moles d'unités structurales bivalentes de formule 3 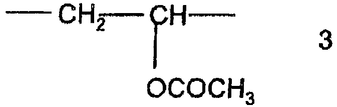 la somme des proportions molaires des unités structurales b) et de celles de formule 3 étant comprise entre 12 et 16 % en moles.

18. Utilisation de copolymères contenant
a) des unités structurales bivalentes dérivées d'éthylène de formule 1
**-CH₂-CH₂-** **(1)**
b) 5 à 12 % en moles d'unités structurales bivalentes, qui proviennent des comonomères ester vinylique de l'acide pivalique, ester vinylique de l'acide néononanoïque, ester vinylique de l'acide néodécanoïque et/ou ester vinylique de l'acide néoundécanoïque, et
c) 4 à 13 % en moles d'unités structurales bivalentes de formule 3 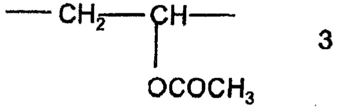 la somme des proportions molaires des unités structurales b) et de celles de formule 3 étant comprise entre 12 et 16 % en moles, pour l'amélioration du comportement d'écoulement à froid de distillats moyens ayant une teneur en soufre d'au plus 350 ppm et une teneur en composés aromatiques d'au plus 22 % en poids.
